# EUROPÄISCHE PATENTANMELDUNG

(11) **EP 1 459 908 A1**
(43) Veröffentlichungstag der Anmeldung: **22.09.2004**
(21) Anmeldenummer: 04000681.9
(22) Anmeldetag: 15.01.2004
(51) Int. Cl.: B60C 11/03, B60C 11/12

(54) **Lauffläche für Winterreifen**

(30) Priorität: 20.03.2003 DE 10312488
(71) Anmelder: Continental Aktiengesellschaft, 30165 Hannover (DE)
(72) Erfinder: Hinnerk, Kaiser, 30659 Hannover (DE); Akif, Celik, 30163 Hannover (DE)

(57) **Zusammenfassung**

Fahrzeugreifen, insbesondere Winterreifen mit einem Laufstreifenprofil welches durch in Umfangsrichtung verlaufende Nuten (6,9,10) und durch Schrägnuten (11,12,13,14) eine Gliederung in zwei axial außenliegende Schulterblockreihen (2,4) und in ein Paar von zwischen den Schulterblockreihen angeordneten Mittelblockreihen (3,5) gegliedert ist, wobei die Blöcke der Schulterblockreihen und der Mittelblockreihen jeweils mit einer Vielzahl von untereinander parallel verlaufenden Feineinschnitten (15,16) versehen sind, und wobei die Grenzen einer Bodenaufstandsfläche Y des Fahrzeugreifens durch die Schulterblockreihen (2,4) verlaufen und wobei eine Profilmitte X durch axiale Außenkanten der Mittelblockreihen (3,5) begrentz ist. Erfindungsgemäß ist der Fahrzeugreifen dadurch gekennzeichnet, dass das Verhältnis der Breite der Bodenaufstandsfläche zur Breite der Profilmitte 1-(D_{R}/100) x 3,3 beträgt wobei D_{R} der Durchmesser der Felge ist, mit welcher der Fahrzeugluftreifen verbindbar ist.

## Beschreibung

Die Erfindung betrifft ein Fahrzeugreifen, insbesondere einen Winterreifen, mit einem Laufstreifenprofil, welches durch in Umfangsrichtung verlaufende Nuten und durch Schrägnuten eine Gliederung in zwei axial außenliegende Schulterblockreihen und in ein Paar von zwischen den Schulterblockreihen angeordneten Mittelblockreihen aufweist, wobei die Blöcke der Schulterblockreihen und der Mittelblockreihen jeweils mit einer Vielzahl von untereinander parallel verlaufenden Feineinschnitten versehen sind, und wobei die Grenzen einer Bodenaufstandsfläche des Fahrzeugreifens durch die Schulterblockreihen verlaufen und wobei eine Profilmitte durch axiale Außenkanten der Mittelblockreihen begrenzt ist.

Fahrzeugluftreifen mit derartigen Laufstreifenprofilen sind in unterschiedlichen Ausführungsvarianten bekannt, beispielsweise durch die EP 0 729 854 B1. Bei der Gestaltung von Laufstreifenprofilen für Winterreifen ist es wichtig, den sehr unterschiedlichen Anforderungen an einen derartigen Reifen gerecht zu werden, da Winterreifen sowohl auf trockenen Fahrbahnen als auch auf nassen Fahrbahnen und unter winterlichen Fahrbedingungen zufriedenstellen sollen. Im Vordergrund steht daher, verschiedenste Profileigenschaften aufeinander möglichst gut abzustimmen, so dass der Reifen beispielsweise im Nassgriff anspricht und ein gutes Führungs- und Traktionsverhalten sowie Bremsverhalten unter winterlichen Fahrbedingungen, beispielweise auf Schnee und Eis, aufweist.

Durch Feineinschnitte soll die Anzahl der wirksamen Kanten erhöht werden, um das Traktionsverhalten insbesondere auf winterlichen Fahrbahnen zu verbessern.

Ein besonderes Problem, mit dem sich der Entwickler von derartigen Fahrzeugreifen konfrontiert sieht, ist die Übertragung eines gewählten Profilbildes eines Reifens einer bestimmten Dimension auf einen anderen Reifen einer anderen Dimension, beispielsweise das Profil eines Reifens der Dimension 135/80 R13 auf einen Reifen mit der Dimension 225/45 R17. Der sehr viel breitere Reifen der Dimension 225/45 R 17 würde nämlich bei einer maßstabsgerechten Übertragung des Profiles des Reifens 135/80 R13 einen Reifen entstehen lassen, der völlig andere Eigenschaften im Fahrbetrieb aufweist, da sich bei einer maßstabsgerechten Übertragung dieses Profilbildes die Verhältnisse völlig verändern würden, was insbesondere die Größe und Länge der wirksamen Kanten im Schulterbereich wie im Profilmittenbereich betrifft.

Entsprechend haben es sich die Erfinder zum Ziel gesetzt, einen Reifen der eingangs geschilderten Art zu schaffen, dessen Profil dimensionsunabhängig auf unterschiedlichste Reifengrößen und -breiten übertragbar ist.

Diese Aufgabe wird mit einem Fahrzeugreifen gelöst, welcher die Merkmale des Patentanspruchs 1 aufweist.

Erfindungsgemäß ist also vorgesehen, dass das Verhältnis der Breite der Bodenaufstandsfläche zur Breite der Profilmitte zwischen 1 - (D_{R}-100) x 1,5 und 1 - (D_{R}-100) x 5 , vorzugsweise 1 - (D_{R}-100) x 3,3 beträgt, wobei D_{R} der Durchmesser der Felge ist, mit welcher der Fahrzeugluftreifen verbindbar ist.

Die Aufgabe wird also auf überraschend einfache Art und Weise dadurch gelöst, dass das Profil dynamisch an verschiedene Reifenbreiten und -größen angepasst wird. Die Erfindungs beruht nämlich auf der überraschenden Erkenntnis, dass Reifeneigenschaften lokal Profilbereichen in der Bodenaufstandsfläche zugeordnet werden können. Hierbei ist die Profilmitte wesentlich für die Wintereigenschaften bezüglich der Eis- und Schneetraktion verantwortlich, während die Profilschulter für die Trockeneigenschaften, nämlich für das Handling- und Bremsvermögen, verantwortlich ist. Durch die dynamische Auslegung der Breitenverhältnisse von Bodenaufstandsfläche zur Profilmitte wird die Profilmitte bei größeren Dimensionen überproportional schmal, während die Profilschulter bei größeren Dimensionen überproportional breit wird.

Hierdurch kann die Wirkung erzielt werden, dass die Umfangsrillen in der Kontaktfläche optimal positioniert werden, und dass sich bei gleichmäßigem Abrieb und gutem Trockenhandling ein hohes Aquaplaningniveau ergibt.

In einer vorteilhaften Weiterbildung der Erfindung kann vorgesehen sein, dass in den Mittelblockreihen Feineinschnitte angeordnet sind, die, in Draufsicht betrachtet, treppenoder sägezahnförmig gestaltet sind und sich jeweils aus abwechselnd aufeinanderfolgenden langen, zumindest im Wesentlichen in Profilquerrichtung verlaufenden und kurzen Einschnittabschnitten zusammensetzen und dass in den Schulterblockreihen sinuswellenförmige Feineinschnitte angeordnet sind, die sich aus einer Aneinanderreihung mehrerer Wellenstrukturen zusammensetzen, die, jeweils für sich gesehen, zumindest im Wesentlichen symmetrisch sind.

Diese Ausgestaltung mit sinuswellenförmigen Feineinschnitten in den Schulterblockreihen und mit stark verschachtelten treppenförmigen Lamellen in der Profilmitte bewirkt eine höhere Steifigkeit der Schulterblockprofile und eine höhere Flexibilität der mittleren Profilblöcke. Diese Ausgestaltung resultiert in einem guten Traktionsverhalten und in einem guten Trockenhandling, wobei die Ausgestaltung der Schulterblockprofile mit sinuswellenförmigen Feineinschnitten für das gute Trockenhandling verantwortlich ist, während die Treppenlamellen in der Profilmitte die wesentlichen Wintereigenschaften des Reifens sicherstellen.

Die unterschiedlichen Feineinschnittgestaltungen der Mitte bzw. der Schulterblockreihen lässt eine Entkopplung der Winter- und Trockeneigenschaften zu. Die Schulterblockreihen allein stellen das gute Trockenfahrverhalten sicher, während die Profilblockmitte die Wintertauglichkeit des Reifens sicherstellt.

An und für sich ist die Kombination verschiedener Feineinschnittsformen bereits durch die EP 0 669 216 B1 bekannt, welche einen Fahrzeugreifen mit einem asymmetrischen Profil beschreibt, der fahrzeuginnenseitig treppenförmige, und fahrzeugaußenseitig sinusförmige Lamellen aufweist. Bei diesem Konzept sollen aber die unterschiedlichen Konzepte Traktionseigenschaften und Trockenfahrverhalten der Reifeninnen- bzw. der Reifenaußenseite zugeordnet werden, nicht jedoch den beiden Außenseiten und dem Mittenbereich.

In einer praktischen Ausgestaltung der Erfindung kann weiter vorgesehen sein, dass die Breite der Feineinschnitte der Schulterblockreihen schmaler ist als die treppenförmigen Feineinschnitte der Profilblockmitte.

In weiteren praktischen Ausgestaltungen der Erfindung kann vorgesehen sein, dass in den Blöcken der Schulterblockreihen Feineinschnitte angeordnet sind, die gegenüber der Reifenumfangsrichtung unter einem Winkel von 70 - 85° geneigt sind und dass in den Blöcken der Mittelblockreihen Feineinschnitte angeordnet sind, die unter einem Winkel von 80 - 90° gegenüber der Reifenumfangsrichtung verlaufen, wobei die Winkeldifferenz zwischen 5 und 15°, insbesondere bis zu 10°, beträgt.

Ferner kann vorgesehen sein, dass der Fahrzeugreifen durch einen gepfeilten Verlauf der Schrägnuten ein drehrichtungsgebundenes Laufstreifenprofil besitzt.

In einer besonders bevorzugten Ausgestaltung der Erfindung kann vorgesehen sein, dass die Umfangsnut als Spiegelachse dient, wobei ferner vorgesehen sein kann, dass die beiden Hälften des Laufstreifenprofils rechts und links der Umfangsnut in Umfangsrichtung um 5 - 50 mm, vorzugsweise 11,5 mm versetzt sind. Ein Versatz bzw. eine leichte Verdrehung einer Laufstreifenhälfte zur spiegelbildlichen anderen Hälfte des Laufstreifenprofils bewirkt auch einen Kantenversatz, welcher sich positiv auf eine geringe Geräuschentwicklung auswirkt. Ein Versatz von 11,5 mm hat sich hierbei als besonders wirksam zur Geräuschreduzierung herausgestellt.

Weitere Vorteile und Ausgestaltung der Erfindung werden anhand eines Ausführungsbeispiels in der Zeichnung und in den Patentansprüchen näher beschrieben. In der Zeichnung ist dargestellt:
- Fig. 1: ein Ausführungsbeispiels eines erfindungsgemäßen Laufstreifenprofils in Draufsicht und
- Fig. 2: das Laufstreifenprofil aus Figur 1 in drei unterschiedlichen Dimensionen in maßstabsgerechter Darstellung.

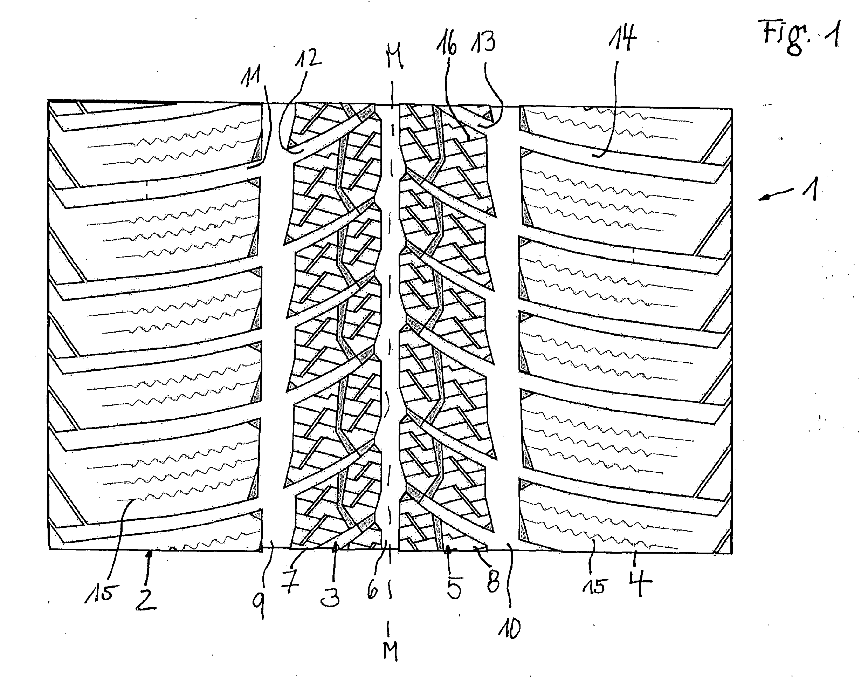

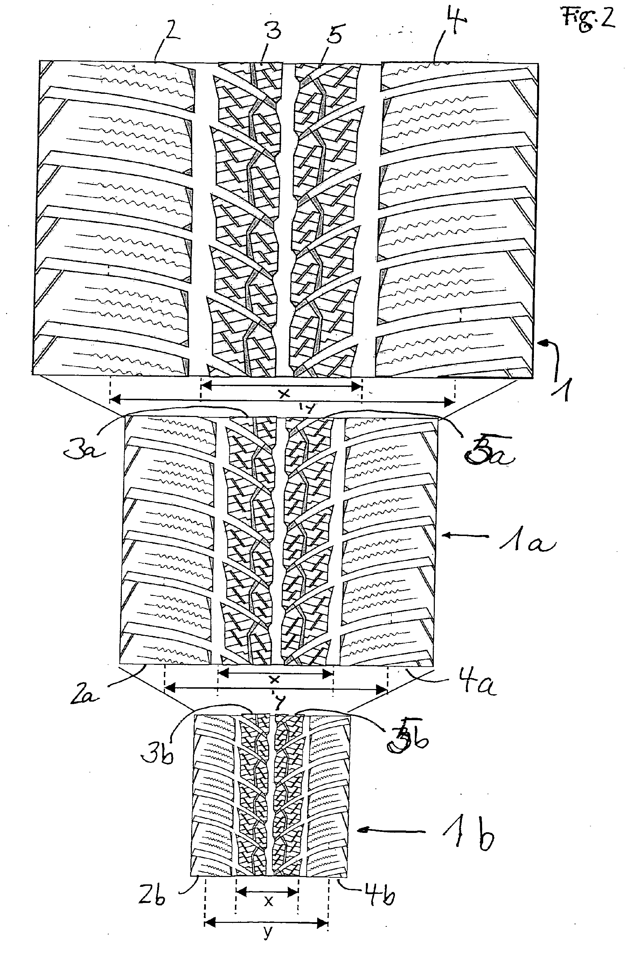

In der Figuren 1 und 2 ist ein Ausführungsbeispiel eines Laufstreifensprofils 1 dargestellt, bei welchem es sich um ein laufrichtungsgebundenes Laufstreifenprofil 1 handelt. In jeder Laufstreifenhälfte sind eine Schulterblockreihe 2, 4 und ein Paar von Mittelblockreihen 3, 5 angeordnet, entlang einer Mittelumfangslinie M/M des Profils ist eine Umfangsnut 6 angeordnet, die durch die Ausgestaltung der sie begrenzenden Blockkanten der Blöcke 7, 8 der Mittelblockreihen 3, 5 leicht gezahnte Flanken besitzt und als Spiegelachse der beiden Profilhälften fungiert. Jede Schulterblockreihe 2, 4 ist von der ihr benachbarten Mittelblockreihe 3, 5 durch je eine breite Umfangsnut 9, 10 getrennt.

Eine weitere Gliederung des Laufstreifenprofiles 1 erfolgt durch Schrägnuten 11 bis 14, deren Gesamtverlauf so gewählt ist, dass sie zwischen den Blöcken 7, 8 der Mittelblockreiehn 3, 5 beginnend zumindest im Wesentlichen kontinuierlich bis zum Laufstreifenrand und über diesen hinaus verlaufen, wobei solcher Art ein als "gepfeilt" bezeichnetes Laufstreifenprofil entsteht, das für viele laufrichtungsgebundene Profile typisch ist. Dabei schließen die Schrägnuten 12, 13 der Mittelblockreihen 3, 5 mit der Mittelumfangslinie M/M einen Winkel von ca. 50 - 70° ein, die Schrägnuten 11, 14 der Schulterblockreihen 2, 4 einen Winkel von ca. 70 - 85°.

Die Schulterblockreihen 2, 4 weisen jeweils Feineinschnitte 15 auf, welche jeweils einen sinuswellenförmigen Verlauf aufweisen und zueinander und zu den Schrägnuten 11, 14 parallel verlaufen.

Die Blöcke 7, 8 der Mittelblockreihen 3, 5 weisen Feineinschnitte 16 auf, welche in Aufsicht treppen- oder sägezahnartig ausgestaltet sind. Die Breite der Feineinschnitte 16 der Mittelblockreihen 3, 5 ist dabei etwa doppelt so groß wie die Breite der Feineinschnitte 15 der Schulterblockreihen 2, 4.

In Figur 2 ist das Reifenprofil aus Figur 1 in Vergleich mit im Wesentlichen gleichen Reifenprofilen 1a und 1b anderer Reifendimensionen dargestellt. Die Pfeile X stellen jeweils die axiale Breite des Paares der Mittelblockreihen 3, 5; 3a, 5a; 3b, 5b dar. Der Pfeil Y zeigt die Breite der Bodenaufstandsfläche, deren Grenzen jeweils durch die Schulterblockreihen 2, 4 verlaufen.

Das Profil 1 ist ein solches der Reifendimension 225/45 R 13, das Profil 1a ein solches der Reifendimension 195/65 R 15 und das Profil 1b ein solches der Reifendimension 135/80 R 13.

Zur erkennen in Figur 2 ist insbesondere, dass die Schulterblockreihen 2, 4 des Profils 1 gegenüber der Profilmitte 3, 5 überproportional breit sind. Entsprechend ist die Profilmitte 3, 5 des Profils 1 überproportional schmal, verglichen mit den Profilen 1a und 1b der kleineren Reifendimensionen.

### Bezugszeichenliste

### (Teil der Beschreibung)

- 1: Laufstreifenprofil
- 2: Schulterblockreihe
- 3: Mittelblockreihe
- 4: Schulterblockreihe
- 5: Mittelblockreihe
- 6: Umfangsrille
- 7: Block
- 8: Block
- 9: Umfangsnut
- 10: Umfangsnut
- 11: Schrägnuten
- 12: Schrägnuten
- 13: Schrägnuten
- 14: Schrägnuten
- 15: Feineinschnitt
- 16: Feineinschnitt
- M-M: Umfangsmittellinie

## Patentansprüche

1. Fahrzeugreifen, insbesondere Winterreifen mit einem Laufstreifenprofil (1), welches durch in Umfangsrichtung verlaufende Nuten (6, 9, 10) und durch Schrägnuten (11 - 14) eine Gliederung in zwei axial außenliegende Schulterblockreihen (2, 4) und in ein zwischen den Schulterblockreihen (2, 4) angeordnetes Paar von Mittelblockreihen (3, 5) aufweist, wobei die Blöcke der Schulterblockreihen (2, 4) und der Mittelblockreihen (3, 5) jeweils mit einer Vielzahl von untereinander parallel verlaufender Feineinschnitte (15, 16) versehen sind, und wobei die Grenzen einer Bodenaufstandsfläche Y des Laufstreifenprofils 1 durch die Schulterblockreihen (2, 4) verlaufen und wobei eine Profilmitte X durch axiale Außenkanten der Mittelblockreihen (3, 5) begrenzt ist,
**dadurch gekennzeichnet,**
**dass** das Verhältnis der Breite der Bodenaufstandsfläche Yzur Breite der Profilmitte X Profilmitte zwischen 1 - (D_{R}-100) x 1,5 und 1 - (D_{R}-100) x 5 , vorzugsweise 1-(D_{R}/100) x 3,3 beträgt, wobei D_{R} der Durchmesser der Felge ist, mit welcher der Fahrzeugluftreifen verbindbar ist.

2. Fahrzeugreifen nach Anspruch 1, **dadurch gekennzeichnet, dass** in den Mittelblockreihen (3, 5) Feineinschnitte (16) angeordnet sind, die, in Draufsicht betrachtet, treppen- oder sägezahnförmig gestaltet sind und sich jeweils an abwechselnd aufeinander folgenden langen, zumindest im Wesentlichen in Profilquerrichtung verlaufenden und kurzen Einschnittabschnitten zusammensetzen, und dass in den Schulterblockreihen (2, 4) sinuswellenförmige Feineinschnitte (15) angeordnet sind, die sich aus einer Aneinanderreihung mehrerer Wellenstrukturen zusammensetzen, die, jeweils für sich gesehen, zumindest im Wesentlichen symmetrisch sind.

3. Fahrzeugluftreifen nach Anspruch 1 oder 2, **dadurch gekennzeichnet, dass** die Breite der Feineinschnitte (15) der Schulterblockreihen (2, 4) schmaler ist als die Breite der Feineinschnitte (16) der Profilblockmitte (3, 5).

4. Fahrzeugluftreifen nach einem der vorangegangenen Ansprüche, **dadurch gekennzeichnet, dass** eine zentrale Umfangsnut (6) eine Spiegelachse des Laufstreifenprofils (1) bildet.

5. Fahrzeugluftreifen nach Anspruch 4, **dadurch gekennzeichnet, dass** die Hälften des Laufstreifenprofils (1) links und rechts der zentralen Umfangsnut (6) in Umfangsrichtung um 5 bis 50 mm, vorzugsweise 11,5 mm, versetzt sind.

6. Fahrzeugluftreifen nach einem der vorangegangenen Ansprüche, **dadurch gekennzeichnet, dass** in den Blöcken der Schulterblockreihen (2, 4) Feineinschnitte (15) angeordnet sind, die gegenüber der Reifenumfangsrichtung unter einem Winkel von 70 bis 85° geneigt sind und in den Blöcken der Mittelblockreihen (3, 5) Feineinschnitte (16) angeordnet sind, die unter einem Winkel von 80 bis 90° gegenüber der Reifenumfangsrichtung verlaufen, wobei die Winkeldifferenz zwischen 5 und 15°, insbesondere bis zu 10°, beträgt.

7. Fahrzeugluftreifen nach einem der vorangegangenen Ansprüche, **dadurch gekennzeichnet, dass** dieser durch einen gepfeilten Verlauf der Schrägnuten (11 - 14) ein drehrichtungsgebundenes Laufstreifenprofil (1) besitzt.
